# EUROPEAN PATENT SPECIFICATION

(11) **EP 3 124 843 B1**
(45) Date of publication and mention of the grant of the patent: **22.01.2020**
(21) Application number: 14887159.3
(22) Date of filing: 28.03.2014
(51) Int. Cl.: F16L 3/20, F16L 1/024, F16L 51/00, F16L 1/026, F16L 1/10

(54) **METHOD FOR INSTALLING A STATIONARY SUPPORT IN A PLANNED POSITION**
VERFAHREN ZUR INSTALLATION EINER STATIONÄREN UNTERSTÜTZUNG IN EINER GEPLANTEN POSITION
PROCÉDÉ D'INSTALLATION DE SUPPORT IMMOBILE EN POSITION VOULUE

(43) Date of publication of application: 01.02.2017
(73) Proprietor: Public Joint Stock Company "Transneft", Moscow 119180 (RU); Joint-Stock Company "Transneft Siberia", Tyumen 625048 (RU); Limited Liability Company "Transneft Research and Development Institute for Oil and Oil Products Transportation", Moscow 117186 (RU)
(72) Inventor: SAPSAI, Alexey Nikolaevich, Moscow 119180 (RU); MIKHEEV, Yurii Borisovich, Tyumen 625048 (RU); BONDARENKO, Valeriy Vyacheslavovich, Chelyabinsk 454000 (RU); SURIKOV, Vitaly Ivanovich, Moskovskaya obl. Balashikha 143930 (RU); FEDOTA, Vladimir Ivanovich, Moscow 119607 (RU); BOGATENKOV, Yury Vasilchievich, Tyumen 625023 (RU); SHOTER, Pavel Ivanovich, Moscow 119180 (RU)
(74) Representative: Latham, Stuart Alexander
(86) International application number: PCT/RU2014/000220
(87) International publication number: WO 2015/147685

(56) References cited:
- WO-A1-03/069203
- RU-C1- 2 499 940
- RU-C1- 2 499 940
- RU-U1- 85 974
- RU-U1- 120 180
- RU-U1- 120 180
- US-A- 3 744 259

## Description

### TECHNICAL FIELD

The proposed invention relates to the field of construction of overground pipelines and can be used for the installation of pipeline supports in difficult geological conditions, such as permafrost conditions.

Stationary supports are installed to ensure the absorption of linear expansion of a pipeline resulting from temperature differences in the transported medium and pressure changes. They ensure that the pipeline is fixed for the estimated service life of the support, taking into account the increased loads that arise in case of subsidence of the neighboring mobile supports.

### PRIOR ART

The proposed method for installing supports is used when dividing a pipeline into thermocompensation units within which the temperature deformations of the pipeline are compensated, the stationary supports being installed at the beginning and at the end of the thermocompensation unit by the proposed method. The stationary supports installed by the proposed method are used when laying newly constructed pipelines as well as when reconstructing main overground pipelines of any diameters and any nominal pressure.
A number of different types of stationary supports are known from the prior art, as well as a number of methods for their onsite installation.

The "supporting apparatus for pipeline systems" according to CA 1232255, embodied with the possibility of correcting the height position of the pipeline, is quite simple in design. The support is embodied in the form of a solid flat base with a post, vertically secured thereto, made in the form of a rod element. A pipe is secured to the post by means of a clamp. The clamp has a bolt-type fixture and can be moved up or down the post together with the pipe if it becomes necessary to adjust its position.

The supporting apparatus for pipeline systems having the possibility of adjusting the height position of the pipeline can be used for small pipeline diameters (up to 325 mm) and cannot be applied to main pipelines.

The possibility of changing the planned position of the pipeline support is also provided in utility model CN 201884792. This utility model relates to a pipe support comprising an upper support and a lower supporting bar. The pipeline is positioned on the upper support and is placed on the cross bars. The vertical supports rigidly fixed to the lower supporting bar are made hollow and contain threaded rods therein. By turning said rods, the height of the support can be adjusted. The movement mechanism is protected from exposure to external conditions, making it possible to operate such a device in practically any climatic conditions. In addition, the device contains a minimum number of detachable connections, and this also extends the longevity of the device fixture. The pipeline rests freely on the upper support, making it possible to use said support for pipelines of different diameters.

The method for changing the height position of this support is quite laborious, since the threaded rods are constantly subject to load due to the weight of the pipeline and transported product. In order to adjust the position of the pipeline, the rods must be unloaded, and this in turn requires the pipeline to be raised by means of the lifting mechanisms to enable such an adjustment.

A Russian Federation utility model RU 64,315is also known that proposes an adjustable pipeline support comprising a base and a bed, the support being provided with symmetrical wedges, located on the base and connected to each other by a screw pair, and being capable of freely moving along the surface of the base, while the pipeline bed rests on plates and reinforcing ribs, said reinforcing ribs being connected to the plates at a right angle, and the plates being installed on the inclined surfaces of the wedges. Before installing the support, the pipeline is raised and secured in place. The support is released from the mounting bolt used for transportation. The base is installed on a concrete column or pile, while the wedges are folded in the middle position. With the help of a screw support, the wedges are spread out and the bed is placed on the inclined surfaces of the wedges provided with plates. The frame is adjusted under the pipeline in such a way that the supporting surface of the frame spacer is parallel to the outer surface of the pipeline. Then the surfaces of the plates, wedges and screw threads are lubricated before the pipeline is lowered.

A method for installing and adjusting the position of a pipeline support is known, described in RU 2335685, entitled "Adjustable pipeline support with feedback". This invention can be used when constructing self-compensating overground main pipelines. The main pipeline and the supporting bed are provided with two vibration sensors. In addition, a strain gauge is installed on the main pipeline. The feedback system sends a command to raise the bed if the signals from the vibration sensors are different. The raising of the bed of the main pipeline is stopped on the basis of the signal from the strain gauge.

The use of said device and the method for monitoring its position is problematic under the permafrost conditions and critically low temperatures of the Far North regions because of the possibility of sensor failure.

The closest in terms of the technical substance is the method, realized in the process of operating an adjustable helical force-measuring pipeline support, embodied according to utility model RU 85974. The support comprises a bed, connected with nuts via the movable lifting weight-measuring mechanisms within the posts on the base, and control devices, embodied in the form of the threaded connections, said movable lifting mechanisms being embodied in the form of screw jacks, and said control devices being embodied in the form of jack lifting screws, while the force-measuring sensors with an analog output, installed under the base of the jacks, are used as force-measuring devices.

The method of changing the height position of said support is quite laborious, since the threaded rods are constantly subject to load due to the weight of the pipeline and transported product. In order to adjust the position, the rods must be unloaded, and this in turn requires raising the pipeline by means of the lifting mechanisms to enable such an adjustment, which is only realistic for pipelines of a smaller diameter.

The object of the proposed technical solution is to provide the possibility of precise adjustment of the projected height of the pipeline support and the angle of inclination thereof during pipeline assembly and the possibility of correcting the height position of the pipeline during its operation.
The technical result achieved using the proposed invention provides stability, strength and immovability of the structure subject to high loads, making it possible to change and correct the height position of the pipeline support.

Further prior art is founds in RU120180U1 and RU2499940C1.

### DESCRIPTION OF THE INVENTION

This object is achieved in that the method for installing a stationary support in a planned position with the possibility of adjusting the height position of the pipeline during operation, according to the proposed technical solution, involves positioning and rigidly fastening a coil of the pipeline support on two supporting axles embodied in the form of beams, which are transversely arranged and movably mounted in the frames of the support with the possibility of moving together with the support coil. Lifting mechanisms are subsequently positioned under each support to enable raising or lowering the coil together with the supporting axles to a planned height, ensuring that the angle of inclination of the coil corresponds to the planned value. Then, the achieved planned position is secured by fastening the supporting axles in the frames at a planned height using the adjustment plates, while maintaining a planned value of the angle of inclination of the coil, followed by welding the ends of the coil to the pipeline. The proposed method also allows adjustment of the height position of the stationary support during operation by first loosening the fastening of the supporting axles in the support frames, placing lifting mechanisms under each supporting axle to raise or lower the coil together with the supporting axles to a planned height, while maintaining a calculated value of the angle of inclination of the coil, and then securing the achieved planned position by fastening the supporting axles in the frames using adjustment plates. The proposed method is applicable to a stationary panel support comprising a support coil and four support frames. The support coil constitutes a pipe provided with an outer casing and a layer of thermal insulation with an inner shell secured to the central part of said pipe, reinforcing ribs being rigidly attached to said inner shell. Each support frame constitutes a rigid load-bearing welded structure and is designed to transfer the weight and load of the pipeline to the pile foundation framework and to accommodate the adjustment blocks for controlling the planned position of the support in terms of height and angle of inclination. The frames include vertically oriented panels secured to the horizontal subframes by means of a bolted connection. The supporting axles are positioned in the axle supports, which are installed in the panels with the possibility of translational movement along the guides. The supporting axles are provided with reinforcing ribs, used to secure them to the support coil. In order to secure the supporting axles, sets of adjustment plates are used, said plates being placed on the replaceable supports under the supporting axles, along with adjusting screws installed in the upper supports above the supporting axles, while hydraulic jacks are used as lifting mechanisms. When installing the stationary support in a planned position between the frames placed along one side of the pipeline, a removable transportation support is installed. When adjusting the planned position of the stationary support, the support coil is moved by the amount of the predicted soil expansion (subsidence) under the pile foundation of the base. When installing a stationary support in a planned position, in order to achieve the required angle of inclination, a set of adjustment plates is added under one supporting axle and a set of adjustment plates is removed from under the other supporting axle, the thicknesses of the sets of added and removed plates corresponding to one another. When installing a support, in order to ensure its electrical insulation from the pile foundation, dielectric spacers are placed between the panels and subframes, and the bolted connections between the panels with subframes are insulated by means of bushings and washers made of a dielectric material. The frames are provided with lateral supports to ensure the transfer of axial loads from the pipeline to the pile foundation via the dielectric spacers.

### BRIEF DESCRIPTION OF THE DRAWINGS

The proposed invention is explained by way of the following drawings.

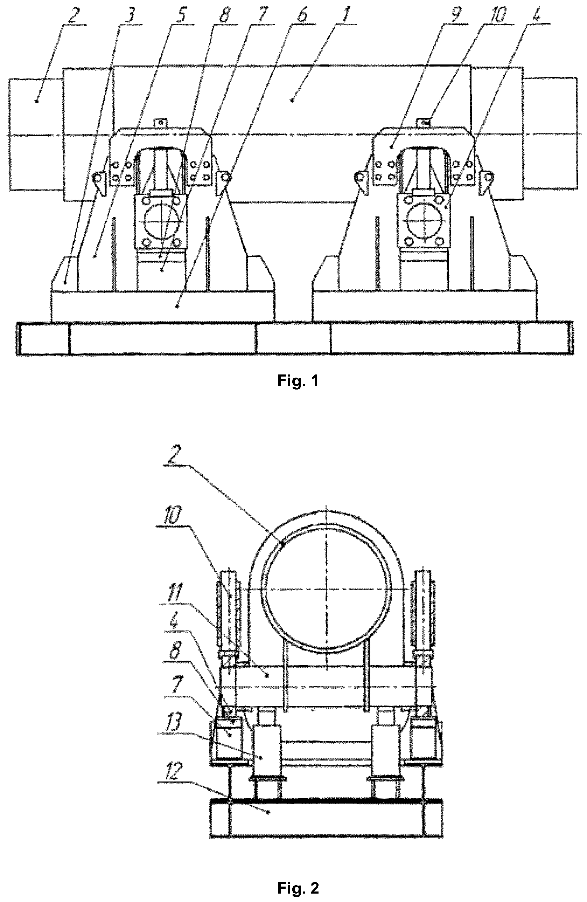

Fig. 1 is a schematic side view of the stationary support of the pipeline, embodied with the possibility of adjusting its height position.
Fig. 2 is a front view of the stationary support of the pipeline, embodied with the possibility of adjusting its height position.

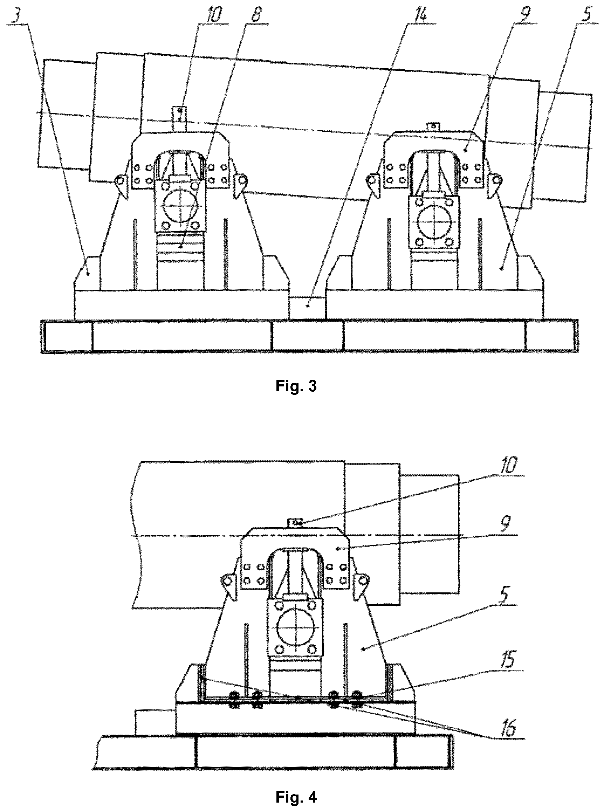

Fig. 3 is a schematic side view of the stationary support of the pipeline, used to realize the proposed method, the pipeline being positioned at an angle to the plane of the framework.
Fig. 4 is a view of the adjustment mechanism used to realize the proposed method.

The references in the drawings denote the following elements:
1. Coil assembly with thermal insulation of the support and outer casing;
2. Pipe;
3. Lateral support;
4. Axle support;
5. Support frame;
6. Subframe;
7. Replaceable support;
8. Adjustment plates;
9. Upper support;
10. Adjusting screw;
11. Supporting axle;
12. Framework;
13. Hydraulic jack;
14. Removable transportation support;
15. Bolted connection with dielectric bushings and washers;
16. Dielectric spacers.

### PREFERRED EMBODIMENT OF THE INVENTION

The proposed method is realized during installation and operation of a stationary panel support.

The support consists of the following main units and parts:
- a coil with thermal insulation 1, embodied with the possibility of being welded to a pipeline, consisting of a pipe 2 with an inner shell secured in the central part thereof (by welding or bolted connection) with reinforcing ribs rigidly welded to said shell. The inner shell is made of a single rolled sheet welded into a pipe, and is welded to the coil pipe using annular seams. In the case of a bolted connection between the coil and the shell, the latter consists of two cylindrical beds having a connector along the pipeline axis. A non-combustible foam glass is used as thermal insulation for the coil. The coil is covered from the outside with an outer casing made of a galvanized sheet. The transversely oriented supporting axles 11, which constitute beams connected to the lower part of the coil via additional reinforcing ribs, are secured in the lower part of the coil under the outer casing;
- four frames of the support 5, each of which constitutes a rigid load-bearing welded structure and is designed to transfer the load from the pipeline to the pile foundation framework and to control the planned position of the support in terms of the height and angle of inclination. The frame consists of a vertically oriented panel secured to a horizontal subframe 6 and provided with reinforcing ribs. Positioned in the central part of the panel is an axle support 4, which is capable of moving along the guides and constitutes a steel sheet with a central hole for placing the supporting axle;
- the upper supports 9 containing the adjusting screws 10, which secure the supporting axles in a planned position, are attached to the frames by means of a bolted connection;
- replaceable supports 7 and removable sets of adjustment plates 8 are placed within the central holes of the frames and are designed to adjust the planned position of the support in terms of height and angle of inclination;
- spacers 16, made of a dielectric material, are located on the subframe and lateral supports 3 and are intended for electrical insulation of the support from the pile foundation framework.
The installation (assembly) of the stationary support is performed as follows.

The support is transported to the operation site as an assembly containing the supporting axles secured within the frames. The support is placed onto a previously produced pile foundation framework 12. A removable transportation support 14 is installed between the two frames located along one side of the pipeline, and removed later, after the support is placed onto the framework. Electrically insulating spacers are installed between the support frame panel and the subframe, and the panel is fastened to the subframe by means of a bolted connection 15 arranged using electrically insulating bushings and electrically insulating washers, said electrically insulating spacers, electrically insulating washers and electrically insulating bushings all being made of, for example, a fluoroplastic material, which provides electrical insulation of the support at a resistance of at least 100 kΩ. After installing the support on the pile foundation framework and securing one of the subframes to said framework (by tack welding or clamps), the vertical angle of inclination of the support is set (if necessary) and the height position of the support is adjusted by placing the lifting mechanisms under the supporting axles to enable raising the support coil. A pair of hydraulic jacks 13, which can be used as such mechanisms, is placed under each axle of the support. Next, the adjusting screws securing the supporting axles are loosened, allowing movement of the axles in the vertical direction. Using the hydraulic jacks, the supporting axles are raised (lowered) by a distance corresponding to the specified planned angle and height of the support coil, with an increase of up to 15 mm. Then, the adjustment plates are installed on (removed from) the replaceable supports in the required quantity, corresponding to the calculated value. When setting the angle of inclination of the support, the thickness of the plates added under one supporting axle should correspond to the thickness of the plates removed from under the other supporting axle. When the installation of the adjustment plates is complete, the support coil is lowered onto the adjusting plates by jacks, while the second, unsecured subframe slides along the framework if there is a slope in the support coil position. Next, the achieved position of the support coil is secured from the top using screws. Once the described adjustment is finished, the subframes are welded to the framework, and the support coil is subsequently welded to the pipeline.

The height adjustment of the pipeline axis (support coil) is carried out in the event of soil subsidence (expansion), when the planned position needs to be restored. To complete the adjustment, hydraulic jacks are installed under the supporting axles onto supporting blocks. The adjusting screws are loosened to allow the supporting axles to move freely together with the axle supports along the guides within the hole of the frame. The support coil is raised together with the supporting axles. A required quantity of adjustment plates is laid onto the replaceable supports within the holes of the frames. In this case, the total thickness of the plates added to all four replaceable supports is the same. If it is necessary to lower the level of the support coil position, the adjustment plates, with an equal overall thickness for all replaceable supports, are removed. After such an adjustment, the support coil together with the supporting axles is lowered onto the adjustment plates. Then, the screws are tightened to ensure that the supporting axles are completely fixed within the holes of the frames.

## Claims

1. A method for installing a stationary support in a planned position in terms of the angle of inclination and height with the possibility of height adjustment during operation, wherein in order to install said stationary support in the planned position a coil (1)of the pipeline support is sequentially positioned and secured on two supporting axles (11) embodied in the form of beams, which are transversely arranged and movably mounted in frames (5) of the support with the possibility of moving together with the coil (1) of the support, and lifting mechanisms (13) are subsequently placed under each supporting axle (11) to enable raising or lowering the coil (1) together with the supporting axles to a planned height, while ensuring that the angle of inclination of the coil corresponds to the planned value, and then, the achieved planned position is secured by fastening the supporting axles (11) within the support frames (5) at a planned height and a corresponding planned value of the inclination angle of the coil using adjustment plates (8), followed by welding the coil (1) edge to the pipeline; and in order to adjust the height position of said stationary support during operation the fastening of the supporting axles (11) within the support frames (5) is loosened, then lifting mechanisms (13) are placed under each supporting axle (11) to enable raising or lowering the coil (1) together with the supporting axles to a planned height, while maintaining a calculated value of the angle of inclination of the coil, and then securing the achieved planned position by fastening the supporting axles (11) in the support frames (5) using adjustment plates (8), **characterized in that** during the installation of the stationary support in a planned position a removable transportation support (14) is placed between the frames (5) located along one side of the pipeline.

2. The method according to claim 1, **characterized in that** the support coil constitutes a pipe (2) provided with an outer casing and a layer of thermal insulation with an inner shell secured to the central part of said pipe, reinforcing ribs being rigidly attached to said inner shell.

3. The method according to claim 1, **characterized in that** said support frames constitute welded support structures, provided with reinforcing ribs, which include vertically oriented panels secured to horizontal subframes (6) by means of a bolted connection, and the supports for installing the supporting axles and the replaceable supports for installing the adjustment plates are installed in said panels with the possibility of translational movement along the guides.

4. The method according to claim 3, **characterized in that** in order to secure the supporting axles sets of adjustment plates are placed on the replaceable supports under the supporting axles, followed by securing the supporting axles by means of adjusting screws (10) installed in the upper supports above the supporting axles.

5. The method according to claim 1, **characterized in that** hydraulic jacks are used as lifting mechanisms.

6. The method according to claim 1, **characterized in that** the supporting axles are provided with reinforcing ribs, used to secure them to the support coil through the casing.

7. The method according to claim 1, **characterized in that** during adjustment of the planned position of the stationary support the support coil is moved by the amount of the predicted soil expansion, that is subsidence.

8. The method according to claim 1, **characterized in that** during installation of the stationary support in a planned position, when setting the angle of inclination of the support, a set of adjustment plates is added under one supporting axle and a set of adjustment plates is removed from under the other supporting axle, the thicknesses of the sets of added and removed plates corresponding to one another.

9. The method according to claim 3, **characterized in that**, in order to ensure electrical insulation from a pile foundation during installation of the support, dielectric spacers (16) are placed between the panels and subframes, and the bolted connections between the panels with subframes are insulated by bushings and washers made of a dielectric material.

10. The method according to claim 9, **characterized in that** the frames are provided with lateral supports to ensure the transfer of axial loads from the pipeline to the pile foundation via the dielectric spacers.

11. Assembly for performing the method according to claim 1, comprising a first pipeline support capable of adjusting a height of the pipeline, the first pipeline support comprising:
a subframe (6) coupled to a pilework foundation (12);
a support frame (5) coupled to the subframe;
a dielectric pad (16) coupled between the subframe and the support frame for electrically isolating the support frame from the pilework foundation;
a support axle (11) coupled to the support frame via adjustable fasteners (10) and configured to be raised or lowered relative to the support frame;
a movable power-operated mechanism (13); and
adjustable plates (8) configured to be positioned below the support axle and to support the support axle at a desirable height such that the desirable height can be achieved by loosening the adjustable fasteners, using the movable power-operated mechanism to lift or lower the support axle, positioning an amount of adjustable plates that corresponds to the desirable height beneath the support axis, and tightening the adjustable fasteners,
wherein the support axle is coupled to the support spool (1) via screws and is configured to support the support spool of the pipeline at the desirable height;
wherein the assembly further comprises a second pipeline support having the same features as the first pipeline support, and a detachable transportation support (14) configured to be positioned between the first pipeline support and the second pipeline support during installation of at least one of the first pipeline support or the second pipeline support and to be removed after installation of one or both of the first pipeline support or the second pipeline support in the pilework foundation.

12. The pipeline support of claim 11 for performing the method of claim 9, further comprising dielectric screw joints usable to fix the subframe to the support frame and to electrically isolate the subframe from the support frame.

## Patentansprüche

1. Verfahren zum Installieren einer stationären Unterstützung in einer geplanten Position hinsichtlich Neigungswinkel und Höhe, mit der Möglichkeit einer Höhenverstellung während des Betriebs, wobei zum Installieren der stationären Unterstützung in der geplanten Position eine Spule (1) der Rohrleitungsunterstützung sequenziell positioniert und an zwei Stützachsen (11) gesichert wird, die in Form von Trägern ausgebildet sind, die quer angeordnet und in Rahmen (5) der Unterstützung beweglich montiert sind, mit der Möglichkeit, sich zusammen mit der Spule (1) der Unterstützung zu bewegen, wobei anschließend Hebemechanismen (13) unter jeder Stützachse (11) platziert werden, um ein Anheben und Absenken der Spule (1) zusammen mit den Stützachsen in eine geplante Höhe zu ermöglichen, während sichergestellt wird, dass der Neigungswinkel der Spule dem geplanten Wert entspricht, wobei dann die erreichte geplante Position gesichert wird durch das Befestigen der Stützachsen (11) in den Stützrahmen (5) in einer geplanten Höhe und mit einem geplanten Wert des Neigungswinkels der Spule mittels Einstellplatten (8), gefolgt von dem Festschweißen des Rands der Spule (1) an der Rohrleitung; und wobei zum Einstellen der Höhenposition der stationären Unterstützung während des Betriebs die Befestigung der Stützachsen (11) in den Stützrahmen (5) gelöst und dann die Hebemechanismen (13) unter jeder Stützachse (11) platziert werden, um ein Anheben oder Absenken der Spule (1) zusammen mit den Stützachsen in eine geplante Höhe zur ermöglichen, während ein berechneter Wert des Neigungswinkels der Spule beibehalten wird, und wobei anschließend die erreichte geplante Position durch das Festlegen der Stützachsen (11) in den Stützrahmen (5) mittels der Einstellplatten (8) gesichert wird,
**dadurch gekennzeichnet, dass** während der Installation der stationären Unterstützung in einer geplanten Position eine entfernbare Transportstütze (14) zwischen die Rahmen (5) gesetzt wird, die sich entlang einer Seite der Rohrleitung befindet.

2. Verfahren nach Anspruch 1, **dadurch gekennzeichnet, dass** die Stützspule ein Rohr (2) bildet, das mit einem Außenmantel und einer thermischen Isolierschicht versehen wird, wobei eine Innenschale an dem zentralen Teil des Rohres befestigt wird und Verstärkungsrippen starr an dieser Innenschale befestigt werden.

3. Verfahren nach Anspruch 1, **dadurch gekennzeichnet, dass** die Stützrahmen geschweißte Stützkonstruktionen bilden, die mit Verstärkungsrippen versehen werden, die vertikal orientierte Platten aufweisen, die mittels Bolzenverbindung an horizontalen Zwischenrahmen (6) befestigt werden, wobei die Stützen zum Installieren der Stützachsen und die austauschbaren Stützen zum Installieren der Einstellplatten in den Platten installiert werden, mit der Möglichkeit einer Translationsbewegung entlang der Führungen.

4. Verfahren nach Anspruch 3, **dadurch gekennzeichnet, dass** zum Sichern der Stützachsen Sätze von Einstellplatten auf den austauschbaren Stützen unter den Stützachsen platziert werden, gefolgt von der Sicherung der Stützachsen mittels Stellschrauben (10) die in den oberen Stützen über den Stützachsen installiert werden.

5. Verfahren nach Anspruch 1, **dadurch gekennzeichnet, dass** Hydraulikzylinder als Hebemechanismen verwendet werden.

6. Verfahren nach Anspruch 1, **dadurch gekennzeichnet, dass** die Stützachsen mit Verstärkungsrippen versehen werden, die verwendet werden, um sie über den Mantel an der Stützspule zu befestigen.

7. Verfahren nach Anspruch 1, **dadurch gekennzeichnet, dass** während der Einstellung der geplanten Position der stationären Unterstützung die Stützspule um den Betrag der prognostizierten Bodenausdehnung, die eine Senkung ist, bewegt wird.

8. Verfahren nach Anspruch 1, **dadurch gekennzeichnet, dass** während der Installation der stationären Unterstützung in einer geplanten Position beim Einstellen des Neigungswinkels der Unterstützung ein Satz von Einstellplatten unter einer Stützachse hinzugefügt und ein Satz von Einstellplatten unter der anderen Stützachse entfernt wird, wobei die Dicken der Plattensätze, die hinzugefügt und entfernt werden, einander entsprechen.

9. Verfahren nach Anspruch 3, **dadurch gekennzeichnet dass** zum Sicherstellen einer elektrischen Isolierung gegenüber einem Verpfählungsfundament während der Installation der Unterstützung dielektrische Distanzhalter (16) zwischen den Platten und Unterrahmen platziert werden und die Bolzenverbindungen zwischen den Platten mit Unterrahmen durch Buchsen und Unterlegscheiben aus dielektrischem Material isoliert werden.

10. Verfahren nach Anspruch 9, **dadurch gekennzeichnet, dass** die Rahmen mit seitlichen Stützen versehen werden, um die Übertragung von Axiallasten von der Rohrleitung auf das Verpfählungsfundament über die dielektrischen Distanzhalter sicherzustellen.

11. Vorrichtung zum Durchführen des Verfahrens nach Anspruch 1, umfassend eine erste Rohrleitungsunterstützung, die geeignet ist zum Einstellen einer Höhe einer Rohrleitung, wobei die erste Rohrleitungsunterstützung umfasst:
einen Unterrahmen (6), der mit einem Verpfählungsfundament (12) verbunden ist;
einen Stützrahmen (5), der mit dem Unterrahmen verbunden ist;
ein dielektrisches Kissen (16), das zwischen den Unterrahmen und den Stützrahmen geschaltet ist, um den Stützrahmen von dem Verpfählungsfundament elektrisch zu isolieren;
eine Stützachse (11), die über einstellbare Befestiger (10) mit dem Stützrahmen verbunden ist und derart konfiguriert ist, dass sie relativ zu dem Stützrahmen angehoben und abgesenkt werden kann;
einen beweglichen fremdkraftbetätigten Mechanismus (13); und
einstellbare Platten (8), die konfiguriert sind für eine Positionierung unter der Stützachse und für das Stützen der Stützachse in einer gewünschten Höhe, derart, dass die gewünschte Höhe erzielbar ist, indem die einstellbaren Befestiger gelöst werden und der bewegliche fremdkraftbetätigte Mechanismus zum Heben oder Senken der Stützachse verwendet wird und indem eine Menge von einstellbaren Platten, die der gewünschten Höhe entspricht, unter der Stützachse positioniert wird und die einstellbaren Befestiger festgezogen werden,
wobei die Stützachse mit der Stützspule (1) über Schrauben verbunden ist und ausgebildet ist zum Stützen der Stützspule der Rohrleitung in der gewünschten Höhe;
wobei die Anordnung eine zweite Rohrleitungsunterstützung umfasst, die die gleichen Elemente wie die erste Rohrleitungsunterstützung und eine entfernbare Transportstütze (14) hat, die konfiguriert ist für eine Positionierung zwischen der ersten Rohrleitungsunterstützung und der zweiten Rohrleitungsunterstützung während der Installation der ersten Rohrleitungsunterstützung oder der zweiten Rohrleitungsunterstützung und für ein Entfernen nach der Installation von einer oder beiden der ersten Rohrleitungsunterstützung und der zweiten Rohrleitungsunterstützung in dem Verpfählungsfundament.

12. Rohrleitungsunterstützung nach Anspruch 11 zum Durchführen des Verfahrens nach Anspruch 9, ferner umfassend dielektrische Schraubverbindungen, die verwendbar sind für die Festlegung des Unterrahmens an dem Stützrahmen und für die elektrische Isolierung des Unterrahmens von dem Stützrahmen.

## Revendications

1. Procédé permettant d'installer un support stationnaire dans une position prévue en termes d'angle d'inclinaison et de hauteur avec la possibilité d'un réglage en hauteur en cours de travail, selon lequel, pour installer le support stationnaire dans la position prévue un rouleau (1) du support de pipeline est séquentiellement positionné et fixé sur deux axes de support (11) réalisés sous la forme de poutres qui sont installés transversalement et montés mobiles dans des cadres de support (5) avec la possibilité de se déplacer avec le rouleau (1) du support, et des mécanismes de levage (13) sont positionnés ensuite sous chaque axe de support (11) pour permettre la montée ou la descente du rouleau (1) avec les axes de support vers la hauteur prévue en garantissant que l'angle d'inclinaison du rouleau corresponde à l'angle prévu, puis, la position prévue obtenue est fixée en fixant les axes de support (11) dans les cadres de support (5) à la hauteur prévue avec la valeur prévue correspondante de l'angle d'inclinaison du rouleau en utilisant des plaques d'ajustage (8) et ensuite le bord du rouleau (1) est soudé au pipeline et pour ajuster la position en hauteur du support stationnaire en cours de travail, la fixation des axes de support (11) dans les cadres de support (5) est libérée puis les mécanismes de levage (13) sont placés sous chaque axe de support (11) pour permettre la montée ou la descente du rouleau (1) avec les axes de support à la hauteur prévue en maintenant la valeur calculée de l'angle d'inclinaison du rouleau puis en fixant la position prévue obtenue par la fixation des support (11) dans les cadres de support (5) en utilisant des plaques de réglage (8),
**caractérisé en ce qu'**
au cours de l'installation du support stationnaire dans la position prévue, un support de transport amovible (14) est positionné entre les cadres (5) situés le long d'un côté du pipeline.

2. Procédé conforme à la revendication 1,
**caractérisé en ce que**
le rouleau de support constitue un tube (2) comportant une enveloppe externe et d'une couche d'isolation thermique avec une coque interne fixée à la partie centrale du tube, des nervures de renfort étant solidairement fixées à cette coque interne.

3. Procédé conforme à la revendication 1,
**caractérisé en ce que**
les cadres de support constituent des structures de support soudées équipées de nervures de renfort qui comportent des panneaux orientés verticalement fixés à des sous-cadres horizontaux (6) au moyen d'une connexion boulonnée et les supports permettant d'installer les axes de support et les supports interchangeables permettant d'installer les plaques de réglage sont installés dans ces panneaux avec la possibilité de translation le long de guides.

4. Procédé conforme à la revendication 3,
**caractérisé en ce que**
pour permettre de fixer les axes de support des jeux de plaques d'ajustage sont placés sur les supports interchangeables au-dessous des axes de support puis les axes de support sont fixés au moyen de vis d'ajustage (10) installées dans les supports supérieurs au-dessus des axes de support.

5. Procédé conforme à la revendication 1,
**caractérisé en ce que**
des vérins hydrauliques sont utilisés en tant que mécanismes de levage.

6. Procédé conforme à la revendication 1,
**caractérisé en ce que**
les axes de support sont équipés de nervures de renfort utilisées pour les fixer au rouleau de support au travers de l'enveloppe.

7. Procédé conforme à la revendication 1,
**caractérisé en ce qu'**
au cours de l'ajustage de la position prévue du support stationnaire, le rouleau de support est déplacé de l'expansion prévisionnelle du sol qui est affaissé.

8. Procédé conforme à la revendication 1,
**caractérisé en ce qu'**
au cours de l'installation du support stationnaire dans la position prévue, lors du réglage de l'angle d'inclinaison du support, un jeu de plaques de réglage est ajouté au-dessous d'un axe de support et un jeu de plaques de réglage est enlevé de l'autre axe de support, les épaisseurs des jeux de plaques ajoutés et enlevés se correspondant.

9. Procédé conforme à la revendication 3,
**caractérisé en ce que**
pour garantir l'isolation électrique par rapport à des piliers de fondation au cours de l'installation du support, des écarteurs diélectriques (16) sont positionnés entre les panneaux et les sous-cadres et les connexions boulonnées entre les panneaux avec les sous-cadres sont isolées par des douilles et des rondelles réalisées en un matériau diélectrique.

10. Procédé conforme à la revendication 9,
**caractérisé en ce que**
les cadres sont équipés de supports latéraux pour garantir le transfert de charges axiales entre le pipeline et les piliers de fondation par l'intermédiaire des écarteurs diélectriques.

11. Ensemble permettant la mise en œuvre du procédé conforme à la revendication 1,
comprenant un premier support de pipeline permettant de régler la hauteur du pipeline, le premier support de pipeline comprenant :
un sous-cadre (6) couplé à un système de piliers de fondation (12),
un cadre de support (5) couplé au sous-cadre,
un tampon diélectrique (16) couplé entre le sous-cadre et le cadre de support pour permettre d'isoler électriquement le cadre de support du système de piliers de fondation,
un axe de support (11) couplé au cadre de support par l'intermédiaire d'organes de fixation ajustables (10) et conformé pour pouvoir être levé ou abaissé par rapport au cadre de support,
un mécanisme moto mobile (13), et
des plaques réglables (8) conformées pour être positionnées au-dessous de l'axe de support et pour supporter l'axe de support à la hauteur souhaitée de sorte que la hauteur souhaitée puisse être obtenue en libérant les organes de fixation réglables en utilisant le mécanisme motorisé réglable pour lever ou abaisser l'essieu de support, en positionnant une quantité de plaques réglables qui correspond à la hauteur souhaitée au-dessous des axes de support et en serrant les organes de fixation réglables,
l'axe de support étant couplé au rouleau de support (1) par l'intermédiaire de vis et étant conformé pour supporter le rouleau de support du pipeline à la hauteur souhaitée,
l'ensemble comprenant en outre un second support de pipeline ayant les mêmes caractéristiques que le premier support de pipeline et un support de transport amovible (14) conformé pour être positionné entre le premier support de pipeline et le second support de pipeline au cours de l'installation du premier support de pipeline et/ou du second support de pipeline et pour être enlevé après l'installation du premier support de pipeline et/ou du second support de pipeline dans le système de piliers de fondation.

12. Support de pipeline conforme à la revendication 11,
permettant la mise en œuvre du procédé conforme à la revendication 9, comprenant en outre des joints à vis diélectriques utilisables pour fixer le sous-cadre au cadre de support et isoler électriquement le sous-cadre vis-à-vis du cadre de support.
